# EUROPEAN PATENT APPLICATION

(11) **EP 4 718 323 A1**
(43) Date of publication of application: **01.04.2026**
(21) Application number: 25200721.6
(22) Date of filing: 08.09.2025
(51) Int. Cl.: G06N 3/045, G06N 5/025, G06N 20/00

(54) **AUTOMATED CONFIGURATION OF PREDICTIVE ANALYTICS USING NEURAL LANGUAGE MODELS**

(30) Priority: 30.09.2024 US 202418902488
(71) Applicant: SAP SE, 69190 Walldorf (DE)
(72) Inventor: Ravichandiran, Vishnu Priya, 69190 Walldorf (DE); Srinivasan, Arun, 69190 Walldorf (DE); Rengarajan, Gayathri, 69190 Walldorf (DE)
(74) Representative: Müller-Boré & Partner Patentanwälte PartG mbB

(57) **Abstract**

A computing system leverages large language models to automate the configuration and execution of predictive analytics techniques. The system receives input identifying a data set and generates prompts to extract necessary information from predictive analytics documentation, or a representation thereof. The large language model processes requests to generate commands to create computing objects for use in carrying out the predictive analysis, as well as to configure procedures for executing the selected predictive analytics technique. The system helps ensure data set compliance with prerequisites of a predictive analytics technique by generating and executing code to preprocess the data. Similarity searches can be performed in a vector database to identify relevant predictive analytics techniques and their requirements. The system supports both user-specified and automatically identified predictive analytics techniques.

## Description

The present disclosure relates to automated generation of computing objects or commands for carrying out a predictive analysis on a data set accessible to a computing system.

### BACKGROUND

Modern enterprises produce vast amounts of data, which can be used for day-to-day operations. However, analytics performed on this data can provide valuable insights into both the data itself and the operations of the enterprise generating it. In particular, predictive analytics refers to the use of statistical techniques, machine learning algorithms, or data modeling to analyze current and historical data to predict future events or outcomes. It is used to identify patterns and trends within data, enabling enterprises to forecast future scenarios, enhance decision-making, and take proactive measures. Predictive analytics typically employs techniques such as regression analysis, decision trees, neural networks, or time series analysis.

Often, a disconnect exists between users who understand the nature of data and make decisions based on it, and those with the technical expertise to perform predictive analytics. As a result, opportunities to apply predictive analytics to data may be missed, as users may not understand the types of analytics available or the insights they can generate. Even when users understand the available analytics, they may lack the technical skills to execute predictive analysis. For those with the requisite technical knowledge, implementing computer code for predictive analytics can be time-consuming and prone to errors.

Efforts have been made to incorporate predictive analytics into end-user applications. For example, software applications may offer libraries of predictive analytics functions and guides on their use. However, these solutions often still require users to spend time identifying relevant predictive analytics functions, understanding their requirements, and preparing the necessary inputs. As a result, significant barriers to the effective use of predictive analytics remain, and manual effort is still required to apply particular techniques. Accordingly, there is room for improvement.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A computing system leverages large language models to automate the configuration and execution of predictive analytics techniques. The system receives input identifying a data set and generates prompts to extract necessary information from predictive analytics documentation, or a representation thereof. The large language model processes requests to generate commands to create computing objects for use in carrying out the predictive analysis, as well as to configure procedures for executing the selected predictive analytics technique. The system helps ensure data set compliance with prerequisites of a predictive analytics technique by generating and executing code to preprocess the data. Similarity searches can be performed in a vector database to identify relevant predictive analytics techniques and their requirements. The system supports both user-specified and automatically identified predictive analytics techniques.

In one aspect, the present disclosure provides a process of configuring a predictive analytics technique. User input is received identifying a data set to be processed using computing logic that carries out a predictive analytics technique. A first prompt is generated by executing computing instructions that cause information regarding data objects used by the predictive analytics technique to be inserted into a first prompt template. This template includes an instruction to extract information usable to generate the data objects.

The first prompt is submitted to a neural language model. A first response is received to the first prompt that includes the information usable to generate the data objects.

A procedure is configured to execute the predictive analytics technique. The configuring includes executing computing instructions to insert an identifier of an object that comprises data of the data set, the information usable to generate the data objects, and an identifier of the predictive analytics technique into a procedure template to provide a procedure.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram depicting an example computing environment in which disclosed techniques can be implemented, including components for configuring and executing predictive analytics techniques using a large language model.
FIGS. 2A-2E illustrate example documentation for predictive analytics techniques.
FIGS. 3A and 3B provide example code for converting text to vector representations, performing vector database searches, and generating prompts and processing responses from a large language model.
FIG. 4A and 4B show example code for defining a predictive analytics scenario, including methods for selecting predictive analytics techniques and preparing data sets.
FIG. 5 provides example code for ensuring data set compliance with prerequisites of a predictive analytics technique by generating executing preprocessing operations.
FIG. 6 illustrates example code for performing preprocessing operations on data sets to conform with the prerequisites of a predictive analytics technique.
FIGS. 7A and 7B depict example code for generating input and output tables for a selected predictive analytics technique using a large language model.
FIG. 8 provides example code for generating output tables, including mapping them to input data tables, and extracting parameter information for a selected predictive analytics technique.
FIGS. 9A and 9B show example code for generating a procedure to execute a selected predictive analytics technique, including constructing the procedure using a predefined template.
FIGS. 10 and 11 illustrate example code for implementing roles and permission grants for accessing data objects used in executing a procedure for a predictive analytics technique.
FIGS. 12 and 13 provide example code for coordinating the generation of HDI objects or SQL commands for executing a selected predictive analytics technique.
FIG. 14 is a flowchart of a process of configuring a predictive analytics technique.
FIG. 15 is a diagram of an example computing system in which some described embodiments can be implemented.
FIG. 16 is an example cloud computing environment that can be used in conjunction with the technologies described herein.

### DETAILED DESCRIPTION

### Example 1 - Overview

Modern enterprises produce vast amounts of data, which can be used for day-to-day operations. However, analytics performed on this data can provide valuable insights into both the data itself and the operations of the enterprise generating it. In particular, predictive analytics refers to the use of statistical techniques, machine learning algorithms, or data modeling to analyze current and historical data to predict future events or outcomes. It is used to identify patterns and trends within data, enabling enterprises to forecast future scenarios, enhance decision-making, and take proactive measures. Predictive analytics typically employs techniques such as regression analysis, decision trees, neural networks, or time series analysis.

Often, a disconnect exists between users who understand the nature of data and make decisions based on it, and those with the technical expertise to perform predictive analytics. As a result, opportunities to apply predictive analytics to data may be missed, as users may not understand the types of analytics available or the insights they can generate. Even when users understand the available analytics, they may lack the technical skills to execute predictive analysis. For those with the requisite technical knowledge, implementing computer code for predictive analytics can be time-consuming and prone to errors.

Efforts have been made to incorporate predictive analytics into end-user applications. For example, software applications may offer libraries of predictive analytics functions and guides on their use. However, these solutions often still require users to spend time identifying relevant predictive analytics functions, understanding their requirements, and preparing the necessary inputs. As a result, significant barriers to the effective use of predictive analytics remain, and manual effort is still required to apply particular techniques. Accordingly, there is room for improvement.

The present disclosure provides techniques that can assist a user in identifying a predictive analytics technique suitable for their particular needs, and to create code or computing objects (such as input, output, or parameter tables) needed to carry out the analysis. Even if a user knows the particular predictive analytics technique they wish to use, disclosed techniques can assist with creating any required code or computing objects.

Often, documentation exists for various types of predictive analytics technique. For example, SAP SE, of Walldorf, Germany, provides pre-defined functions for performing various types of predictive analytics using their PREDICTIVE ANALYTICS LIBRARY ("PAL"). Documentation for PAL includes information such as a general description of a predictive analytics technique, the function that is called to perform an analysis, requirements for a data set to be used as input to the technique, mandatory and optional parameters to be specified, and definitions of input and output tables. The PAL documentation can also provide examples of how to use a given function, as well as example results.

Documentation for predictive analytic functions can be converted to semantic embeddings in a vector store, as well as being stored in a database in text form. For text information stored in the database, the information from the documentation can optionally be processed, such as to facilitate storage and retrieval. As an example, tables in documentation can be converted to JSON representations, which can assist in processing the documentation information during performance of disclosed techniques. In some cases, the semantic embedding in the vectors and the document text can be stored in a multi-modal database, such as SAP HANA CLOUD, which can process queries that access both relational and vector data.

A user can identify a particular data set to be used for a predictive analysis. Disclosed techniques can then perform operations to confirm that the data set is suitable for use with the selected predictive analytics technique. For example, the data set can be analyzed to confirm whether it has identifier columns that may be required by the computing code that implements the selected technique, or that the data set contains appropriate values. Some predictive analysis techniques may require, for example, data sets that do not have missing or null values. If issues with a data set are identified, disclosed techniques can generate appropriate operations to be executed on a data set to provide a new or modified dataset that can be used with by the computing process that implements the predictive analytics technique.

The disclosed techniques can then obtain commands, such as example SQL operations, from the predictive analytics documentation, which can be provided to a large language model to extract information such as parameters that are needed for execution of the predictive analytics function. The large language model can be given rules and syntax to generate computing objects, such as input tables and output tables, needed for the computing process that implements the predictive analytics technique. The generated data objects, or at least commands for generating the data objects, can be saved, and optionally the desired predictive analysis can be performed.

Disclosed techniques are described as using large language models, however, the techniques can be implemented more generally using neural language models, optionally in conjunction with natural language generator functionality. A neural language model is a computational model for processing, generating, or understanding natural language, where the model is based on a neural network architecture. The model learns representations of language through training on large corpora of text data and is capable of identifying patterns, relationships, and context in sequences of words or tokens. Neural language models include, but are not limited to, architectures such as recurrent neural networks (RNNs), long short-term memory networks (LSTMs), or transformer-based models. Transformer models can include both small language models (SLMs) and large language models (LLMs), which differ in the number of parameters and their ability to handle more complex or extensive language tasks. Architectures utilizing Mixture of Experts (MoE) techniques are also encompassed within neural language models.

### Example 2 - Example Computing Environment and Example Operations for Automatically Defining a Predictive Analysis

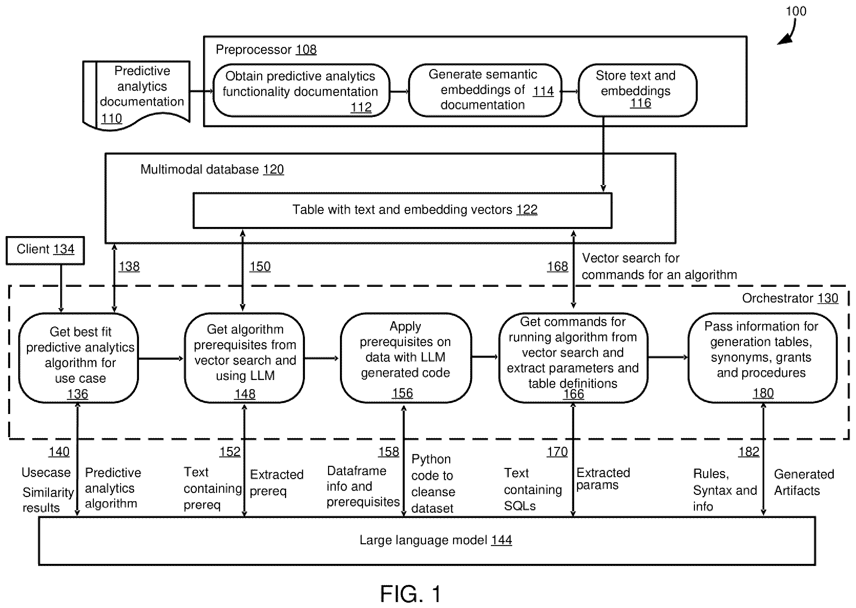

FIG. 1 illustrates a computing environment 100 in which disclosed techniques can be implemented, as well as processing steps that can be performed by components of the computing environment. Initially a preprocessor 108 obtains predictive analytics documentation 110 at 112. The predictive analytics documentation 110 includes information about a plurality of predictive analytics techniques. This information can include a description of the technique, which can include information about use cases for the technique. The information also typically includes information about inputs used by the technique, including any requirements for a data set, such as if a particular type of identifier column is needed for tabular data, or if missing or NULL values are permitted. The information can also include information about mandatory and optional parameters. As an example of a mandatory parameter, some clustering techniques require input for a number of clusters to be formed. The information also typically includes details about how a predictive analytics technique should be called, and can include example commands for creating suitable input data objects (like tables) or for executing an analysis using such input.

At 114, the preprocessor 108 generates (or causes the generation of) semantic embeddings for at least a portion of the predictive analytics documentation. Generating semantic embeddings can be tailored to the documentation format and performance considerations.

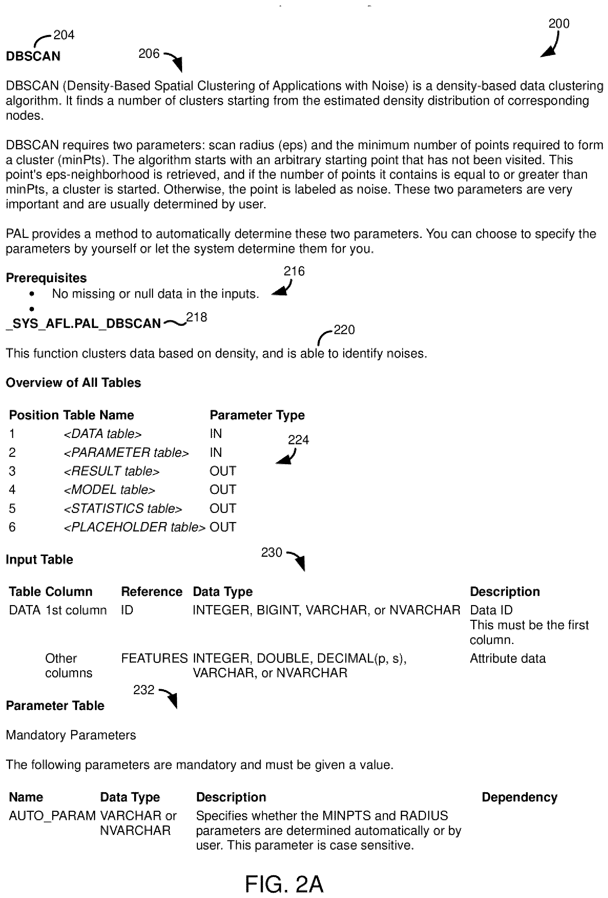

FIGS. 2A-2D provide an example 200 of information in the predictive analytics documentation 110. The example 200 is taken from the SAP HANA DATABASE PREDICTIVE ANALYSIS LIBRARY (PAL) of SAP HANA CLOUD product of SAP SE, of Walldorf, Germany. The example 200 is documentation for the DBSCAN clustering algorithm. The SAP documentation includes similarly structured details for numerous predictive analytics techniques, and illustrates how semantic embedding can be created in a layered approach. That is, an overall set of embeddings for all available predictive analytics algorithms can be created, and that can contain semantic embeddings that represent each technique. That is, for example, for an overall set of embeddings, a subset of embeddings can be created for individual algorithms, such as DBSCAN. Particularly if a consistent structure is used for documentation, embedding subsets can be created for individual portions of a technique's documentation.

With reference to FIG 2A, the example information 200 for DBSCAN includes a name 204 of the technique and a general overview 206 of the technique, including what the technique does and required parameters. These portions of the information 200 can be part of a further subset of embedding information for the DBSCAN technique, or they can be split into multiple subsets, such as by paragraph. Techniques for generating embeddings often include methods to further break down text into smaller units for processing (referred to as "chunking"). This consideration also comes into play for the "manual" specification of sets and subsets, such in parsing logic used to process predictive analytics information generally, or information for individual predictive analytics techniques, which is another form of chunking the text to help organize the text into semantically related units, as well as to help ensure that each embedding contains adequate information about the text it represents).

A reason for breaking text into smaller units is typically vectors used for storing embeddings have a fixed size, or otherwise have size constraints, such as a maximum size. Generally, for a fixed size vector, the semantic accuracy of an embedding drops as the amount of text to be summarized by the embedding increases. Embedding generators can use techniques to "chunk" text based on punctuation, paragraphs, or other line spacing cues, or by using a maximum token limit. To maintain semantic coherence across sections or chunks, embeddings can be generated for overlapping sections of two chunks, or multiple chunks can be used to generate an overall semantic embedding for the multiple chunks.

FIG. 2A also illustrates information 216 about prerequisites for a technique, in this case specifying that the input data must not have missing values or null data, a name 218 of the function that carries out the analysis, as well as a more brief description 220 of the technique, and an overview 224 of tables, input and output, used by the algorithm. Again, these sections can be embedded as a single subset or multiple subsets. As an example of how chunk-based processing by an embedding generator can occur, each line representing a specific table in the overview 224 can have its own embeddings vector.

The remaining content of the information 200 can be optionally divided into subsets, and chunked, as described for the previously described content. The remaining content of the information 200 is relevant to later discussions and will be briefly described here. Input tables in the overview are described in greater detail at 230. For each table, the information 230 includes a description of columns in the table, optionally along with a required position of the column in the table. Data types required for use with a given column can also be specified.

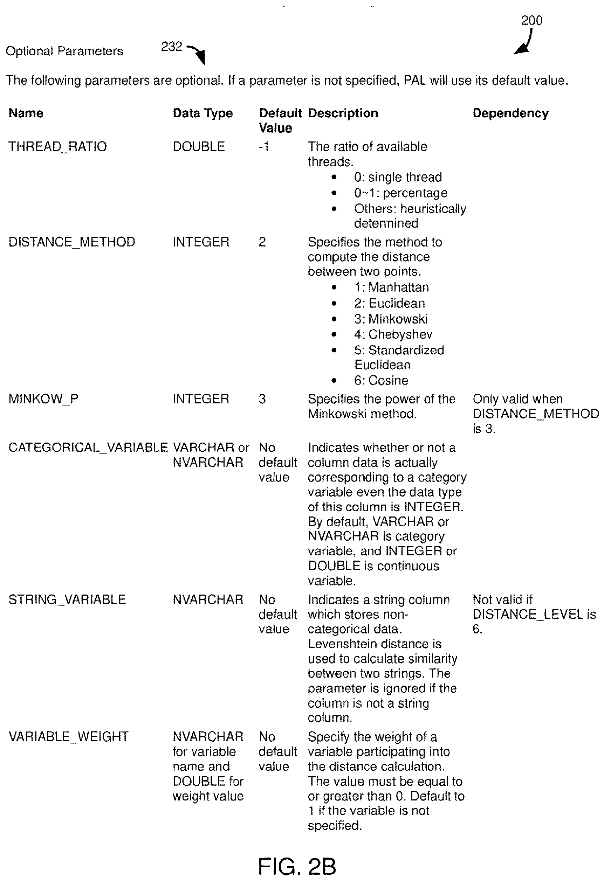

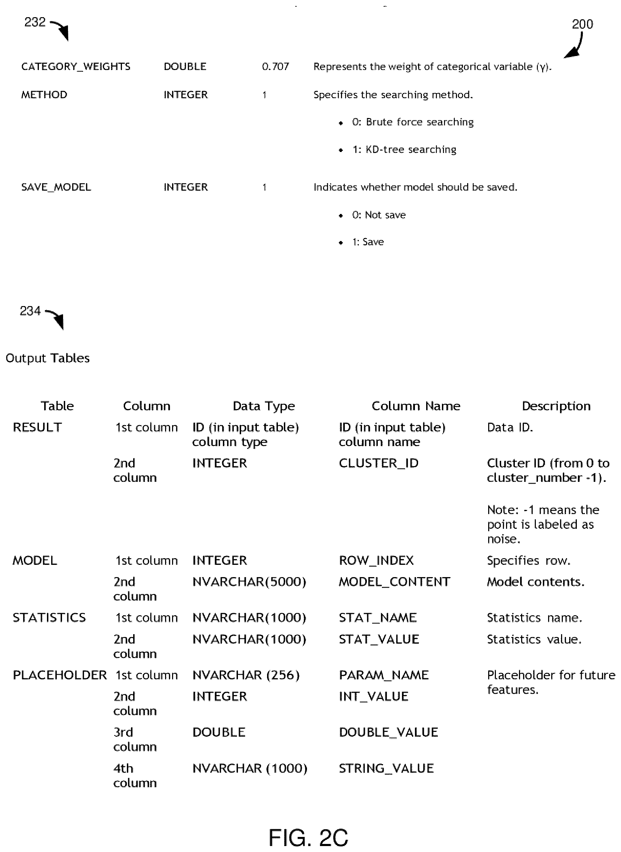

The information 232 is for a table of parameters used by the algorithm, and information about the columns in the table, including, with reference to FIGS. 2B and 2C, a list of mandatory and optional parameters. Output table information 234 is also provided in FIG. 2C.

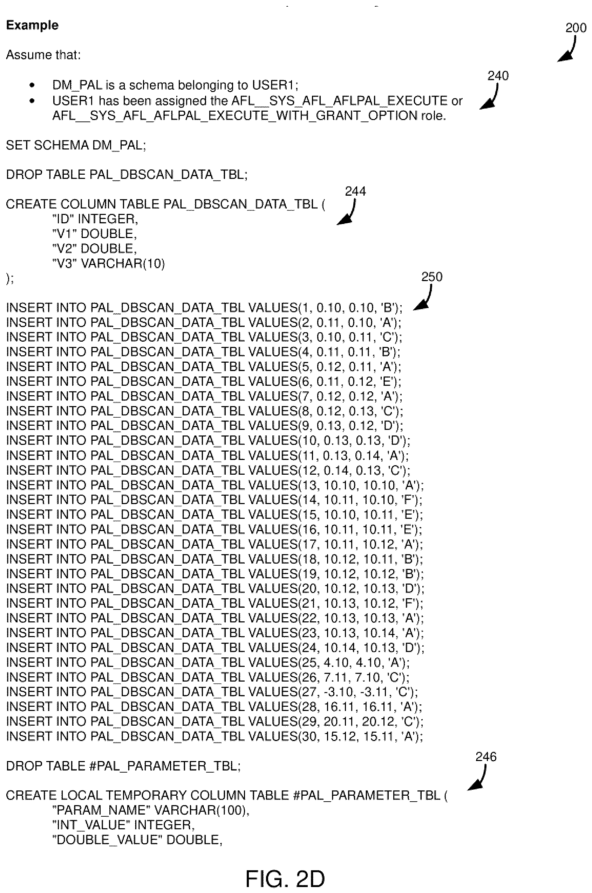

With reference to FIG. 2D, the information 200 includes an example use 240 of the technique, including starting assumptions for the scenario, commands 244, 246 to create the data and parameter tables of the overview 224, in the format specified in the information 230, 232, and commands 250 to insert data values into the data table (where the parameter values are included in the command 246 to create the parameters table).

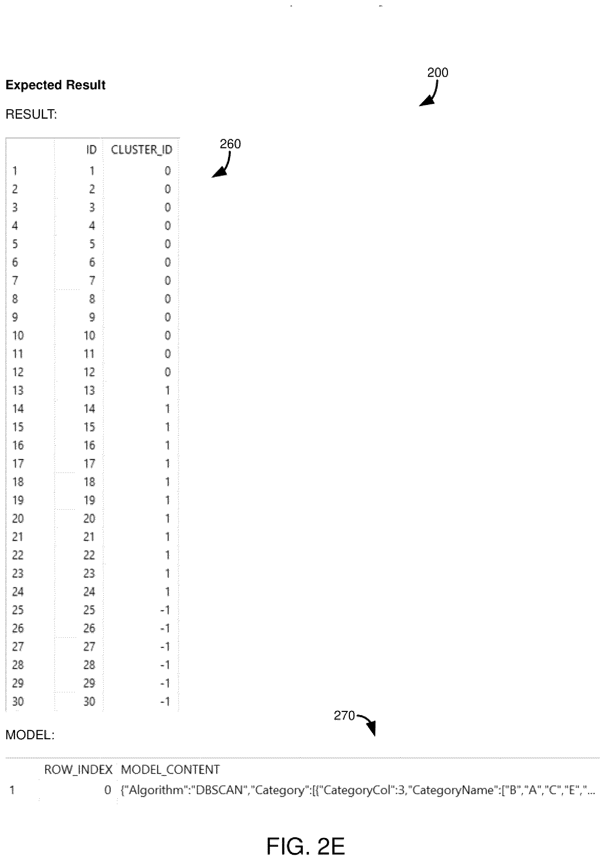

Continuing to FIG. 2E, the information 200 includes example output 260 of executing the DBSCAN algorithm using the example data in the data table and the parameter values of the parameter table. The information 200 also includes information 270 about the model used for the analysis. The information identifies the particular algorithm used, identifiers of columns with categorical variables, and observed category values. In addition to categorical variables, the model information can include details such as the non-categorical variables used, the distance metric and any associated parameters, the cluster boundaries or representatives, any transformations applied to the data (e.g., scaling or encoding), and the values of key hyperparameters, such as the minimum number of points to form a cluster and the scan radius. This information helps ensure the clustering process can be accurately reproduced, interpreted, and extended to new data.

Returning to FIG. 1, in generating semantic embeddings for the documentation 110 at 114, each text segment used to generate a vector can be submitted to a semantic embeddings generator, such as application programming interfaces (APIs) for large language models (LLMs) such as the CHATGPT API from OPENAI, the COHERE EMBEDDING API, HUGGING FACE MODELS, or the BTP AI CORE SERVICE from SAP SE. The embeddings are linked with the corresponding text segments that were used to generate them.

The text and embeddings are stored at 116. For example, the text and embeddings can be stored together in a multimodal database 120. The multimodal database 120 includes a table 122 that stores both text and its associated embedding vectors. SAP HANA CLOUD is an example of a suitable multimodal database 120.

In other implementations, text and vector information can be stored in separate databases, such as storing text information in a relational database and vector embeddings in a vector database. Information between the databases can be correlated using a common identifier, such as a DOCUMENT_ID attribute. Similarity searches using the vector database can retrieve identifiers of relevant embeddings, where the associated identifier can be used to retrieve the text from which the embedding was generated.

An orchestrator 130 can perform operations to assist users in identifying predictive analysis techniques that may be suitable for a particular use case, or preparing data sets for use in a technique and generating commands to create input objects needed for a technique, mandatory or optional techniques, or output objects, including adjusting standard output object definition to correspond to input objects to be used in analyzing a particular data set.

A client 134 provides input to the orchestrator 130, such as providing an explanation of the analysis a user is looking to perform. As an example, the user input may be "amenity density analysis." The input can include identifiers of one or more data sets the user wishes to analyze. In some cases, the orchestrator 130 can provide output in different formats, such as SQL statements or HDI (HANA DEPLOYMENT INFRASTRUCTURE) projects. If multiple output options are available, the user input can also specify an output format, where a default format can be used if one is not specified.

The orchestrator 130 performs operations at 136 to identify a predictive analytics technique that is determined to be most suitable for the use case expressed in the user input. The user input can be converted to semantic embeddings in a vector format, such as by calling an embedding generation service as described above.

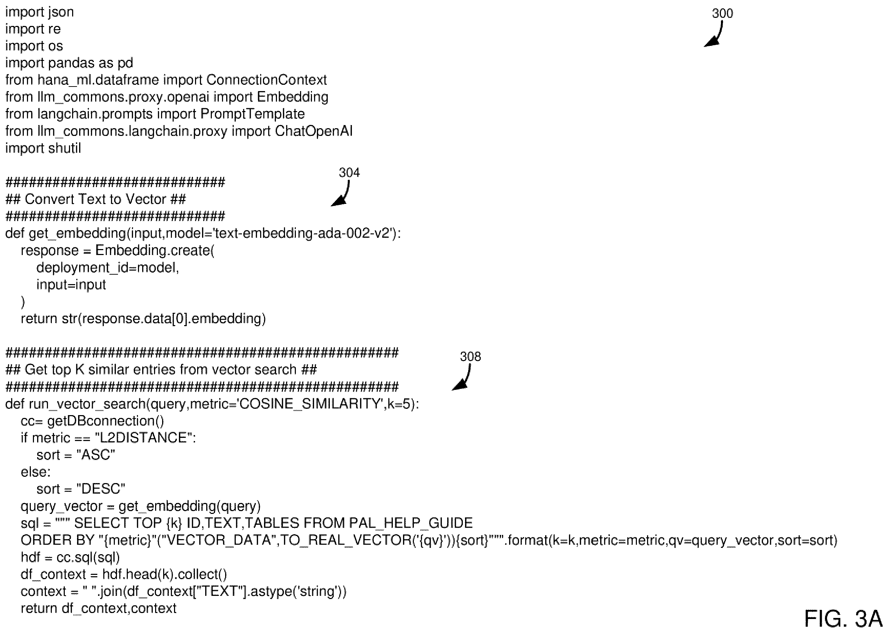

FIG. 3A provides example code 300, which includes a function 304 that takes input, such as the user input expressing information about a desired analysis and provides an embeddings vector. In FIG. 1, at 138, the embeddings vector can be submitted to the multimodal database 120, and a similarity search can be performed on the embedding vectors of the table 122. The similarity search can return to the orchestrator 130 identifiers of predictive analytics techniques that are most similar to the user prompt, and optionally additional information, such as descriptions of the identified techniques. FIG. 3A provides code 308 for performing the similarity search.

At 140, a prompt is submitted to a large language model 144 by the orchestrator 130. The prompt includes an instruction to select a technique that is most suitable for the user's purpose, such as the user input, which can be included in the prompt. The prompt also includes identifiers and, optionally, additional information for the techniques identified by the similarity search performed at 138. The large language model 144 returns to the orchestrator 130 the selected predictive analytics technique. While the large language model 144 is shown as a single model, the large language model 144 can be a selected one of a plurality of large language models. For example, different prompts generated during processing preformed by the orchestrator 130 can be submitted to different large language model, while any particular prompt is submitted to a single large language model 144. Thus, unless the context clearly involves a single language model 144, multiple large language models can be used. For example, the claims of the present application refer to different prompts being submitted to "a" or "the" large language model. However, as to different prompts, each prompt can be submitted to a different large language model, where the multiple large language models are embraced by "the" large language model.

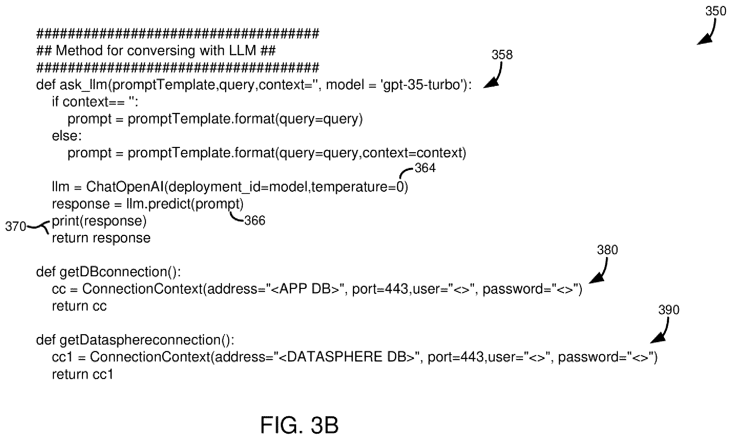

Disclosed techniques can request that the large language model 144 perform a variety of operations. Code 350 of FIG. 3B includes code for communicating with the large language model 144 and, in some cases, for processing a response. Code 358 defines a function to submit a prompt to a large language model, where the function takes as argument a prompt template (which can represent a "generic" instruction to the large language model for a particular purpose, such as obtaining a selection of a predictive analytics technique), a query (such as user input), optionally context information (where context information can be other information inserted into a prompt template other than use input, such as a list of predictive analytics techniques from which the large language model can select), and an identifier of the large language model to be used. If a context is not provided, only the query is submitted to the large language model. Otherwise, both the query and the context are used in the prompt template.

Code 364 opens a connection to the large language model provided as a function argument, and can set model parameters, such as a temperature. Code 366 submits the prompt to the large language model. Code 370 prints the response, as well as providing the response as a function return value.

The code 300 also includes code 380 to connect to a database, such as the database 120, and code 390 to connect to another data source, such as a data source that includes data sets that be processed using the selected predictive analytics technique. The database connections can be used for various purposes, including to retrieve information to be included in a prompt or for processing responses from the large language model.

As an example of how the query and context can be used, a prompt template may contain a generation instruction the large language model to select a predictive analytics technique that best matches user input provided as the query. The context can include the predictive analytics techniques from which the large language model is to select, such as determined using the similarity search performed in the database 120.

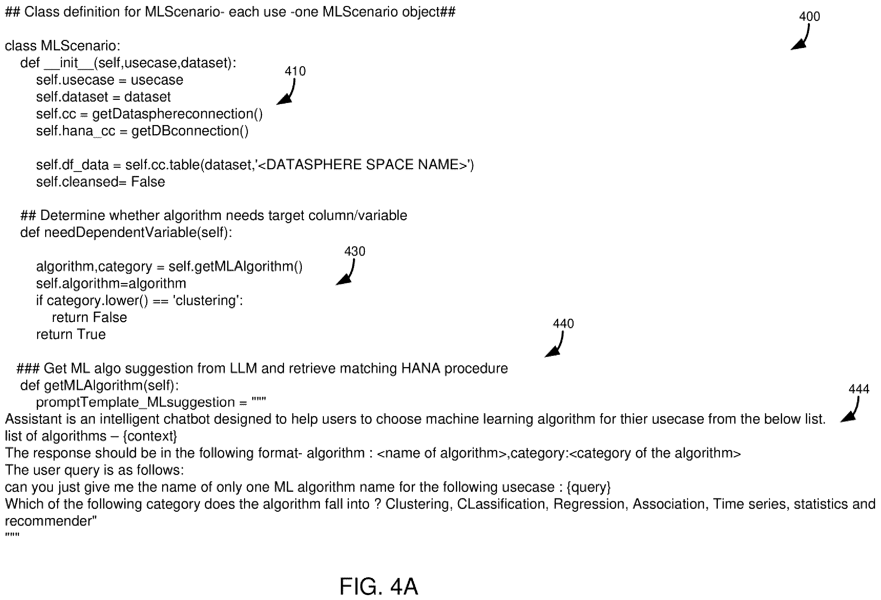

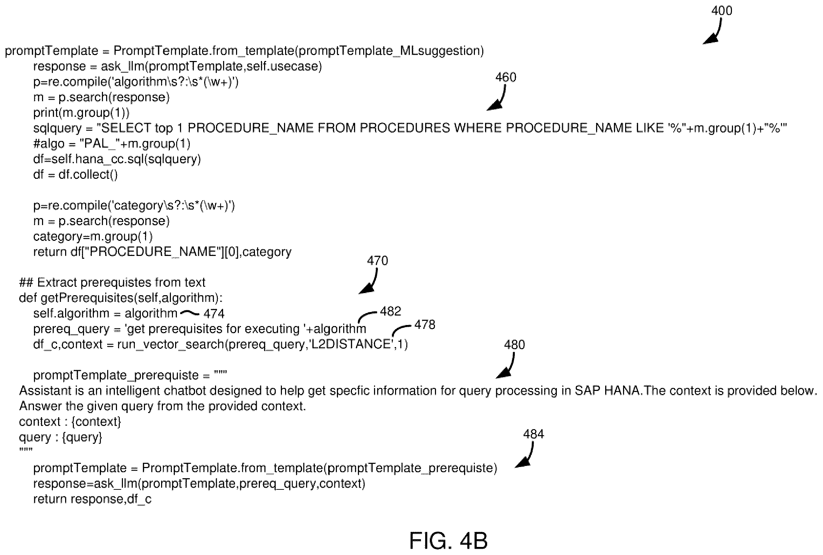

Code 400 of FIGS. 4A and 4B provide a definition of a "MLScenario" class. Referring first to FIG. 4A, the class includes data members 410 to hold information such as a use case identifier, an identifier of a data set to be used, a connection to a data source containing or otherwise providing access to the data set, a connection to a database, such as the database 120, a variable to hold the retrieved data set, and a flag indicating whether that data set has been cleansed.

The code 400 includes code 430 defining a method to determine whether the selected predictive analytic requires a target variable, such as a target column. If the category is 'clustering,' false is returned, indicating no target variable is needed; otherwise, true is returned. Generally, target variables can correspond to a dependent variable or output variable, or, such as in supervised learning techniques, can be used to identify patterns between independent variables (inputs) and the target variable.

Code 400 provides a method 440 to communicate with the large language model to select a predictive analytics technique to be used with the particular user input and identified data set. The method 440 includes an example prompt 444 with instructions for a particular task and placeholders for the context and query.

Disclosed techniques can be implemented in a different manner, particularly with respect to the operations 136 and associated operations 138, 140. For example, rather than first performing the operation 138, the operations at 140 can involve submitting a prompt to the large language model 144 to select from a list of predictive analytics techniques provided in a prompt, such as a prompt similar to the prompt 444, but, instead, of including "context," the prompt can include a static list of techniques such as "[Clustering: DBSCAN, Time series : AUTOARIMA, Classification: SVM]". The large language model 144 can select the best technique for the user prompt from this list, and subsequent operations with the table 122 can be used to identify specific techniques of the documentation 110, using the table, which match the technique selected from the static list. If multiple matches are found, at least satisfying particular similarity threshold, a further prompt can be submitted to the large language model 144 to select the most suitable technique, in a similar manner as described above.

Code 460 of FIG. 4B performs a vector search for predictive analytics techniques in the table 122 that are similar to particular input. In the code 460, the input corresponds to a predictive analytics technique selected by the large language model 144. The code 460 is particularly useful in the implementation where the large language model 144 is provided with a static list of techniques from which to select. The code 460 is generally similar to a vector query performed at 138, where predictive analytics techniques are identified based on similarity to user input. A difference is, when results of the vector search are used in the prompt used at 140, the selection is already tied to a specific technique of the table 122, and so an additional vector search need not be performed.

The code 460 can be executed as part of operations at 148 to prepare one or more data sets identified by the user, or otherwise identified for use with the selected predictive analytics technique, for use with the selected technique. In particular, the code 460 can be executed during operations 150, where the orchestrator 130 contacts the multimodal database 120 to determine prerequisites for using the selected technique. Prerequisites can include that a data set does not have missing or null values.

In particular, at 148, the orchestrator 130 performs operations to obtain information about prerequisites for a data set to be used with the selected predictive analytics technique. Code 470 of FIG. 4B causes a vector search to be performed to identify prerequisite information extracted from the predictive analytics documentation 110, and then provide the information to the large language model 144 so it can extract the prerequisites from the documentation for the selected technique. More particularly, line 474 sets an algorithm variable to have a value of the selected algorithm and line 476 adds that algorithm to a predefined query. Line 478 sets the value of the context for the large language model prompt to the results of executing the query using the multimodal database 120 and the table 122.

Code 480 defines the prompt template for retrieving prerequisite information, where the query for the prompt template is defined in line 482. The query and context information are added to the general instructions in the prompt template defined in code 480. Code 484 causes the prompt to be submitted to the large language model 144, where the response is assigned as a value of a response variable.

Referring back to FIG. 1, the text of the prerequisites is returned to the orchestrator 130 as part of the operations 148. Text in the prompt template is provided to the large language model 144 as part of operations 152, which also include receiving the response from the large language model identifying the prerequisites.

At 156, the orchestrator 130 performs operations to ensure that data sets used with the selected predictive analytics technique comply with the identified prerequisites. In particular, the large language model 144 is provided with a prompt that includes information about the data sets and the prerequisites. The response can include code that can be executed on the data set such that the processed data set complies with the prerequisites.

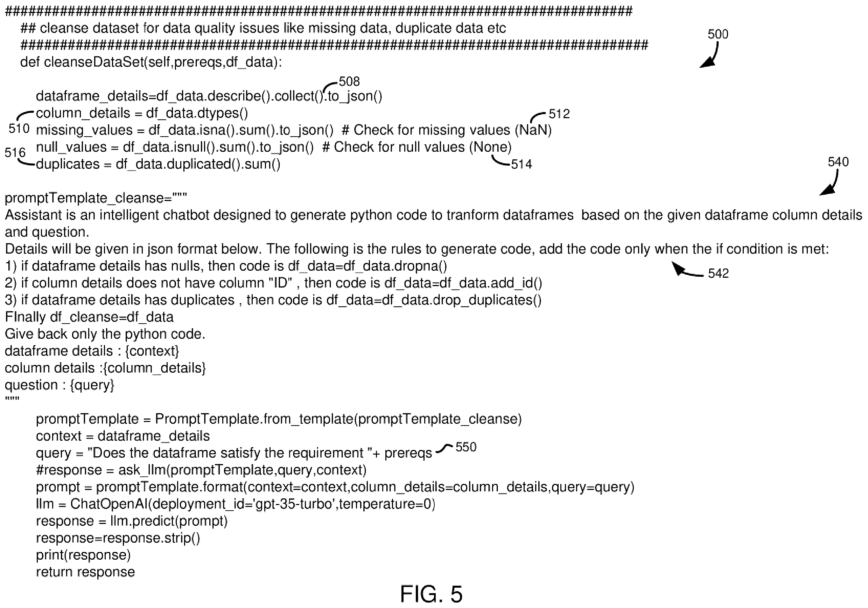

FIG. 5 provides example code 500 for performing these operations of 156. Lines 508 and 510 execute functions to, respectively, provide a JSON representation of descriptive characteristics of the data set and information about columns in the data set, such as column data types and column names (which can be used to determine whether an ID column is present, which can be a prerequisite for some predictive analytics techniques). Information provided by the "describe" function of line 508 can include information such as a number of non-null entries in each column (also referred to as "count"), a number of unique values in each column (at least for textual data), a most frequent value, the frequency of the most frequent value, the average of data in each column ("mean"), the standard deviation in the data, the minimum and maximum values in each column, and optionally other information about value distributions in the data set. Line 512-516 call functions to check for, respectively, missing values, null values, and duplicate rows.

The code 500 also includes code 540 defining a prompt to be submitted to the large language model 144 as part of operations 158. The code 540 includes a general instruction 542, part of the prompt template, tasking the large language model 144 with returning certain python code if the large language model identifies certain conditions in the information about the data set described above. The query of the prompt code 540 is provided at line 550, which instructs the large language model 144 to determine whether the data set satisfies the prerequisites identified at 152.

The operations at 156 and 158 can also involve submitting a prompt to the large language model 144 to determine if a data set has other types of properties that indicate that preprocessing operations should be performed. For example, if only certain data types are useable in the selected predictive analytics technique, the operations can include casting nonconformant columns to another data type. The operations can also include reordering columns in the data set to match prerequisites.

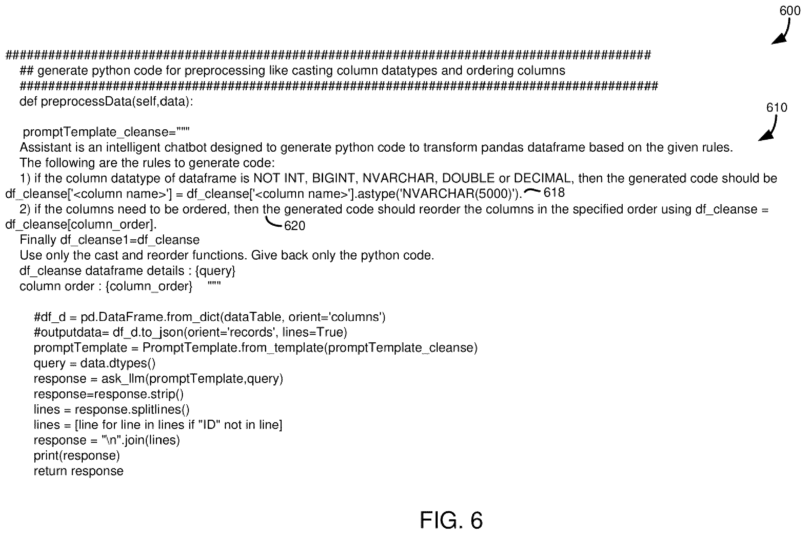

FIG. 6 provides example code 600 to perform preprocessing operations. In particular, code 610 defines a prompt to be provided to the large language model 144. The prompt includes instructions on particular python code the large language model 144 should return if one of the rules is not satisfied. In line 618, if the data set includes columns that do not have an allowed data type, code is returned to cast the nonconforming columns as "NVCHAR(5000)" data type. In line 620, if the columns are not in an order specified by "column_order", which can be extracted from the prerequisite information, code can be executed to reorder the columns in the data set.

With the data set now satisfying any prerequisites, at 166, the orchestrator 130 can perform operations needed to provide input to the selected predictive analytic technique. For example, data in the data set may be required to be provided in one or more specific input tables required by the selected technique, output tables for holding analysis results defined, and commands for executing the predictive analytic technique generated.

Generally, the operations at 166 including operations 168 to perform a vector search on the table 122 of the multimodal database 120 to identify information such as input tables, output tables, and required parameters for the selected predictive analytics technique. The results can be provided to the large language model 144 as part of operations 170, where the large language model can adapt the information for use with the data sets selected for use with the selected technique.

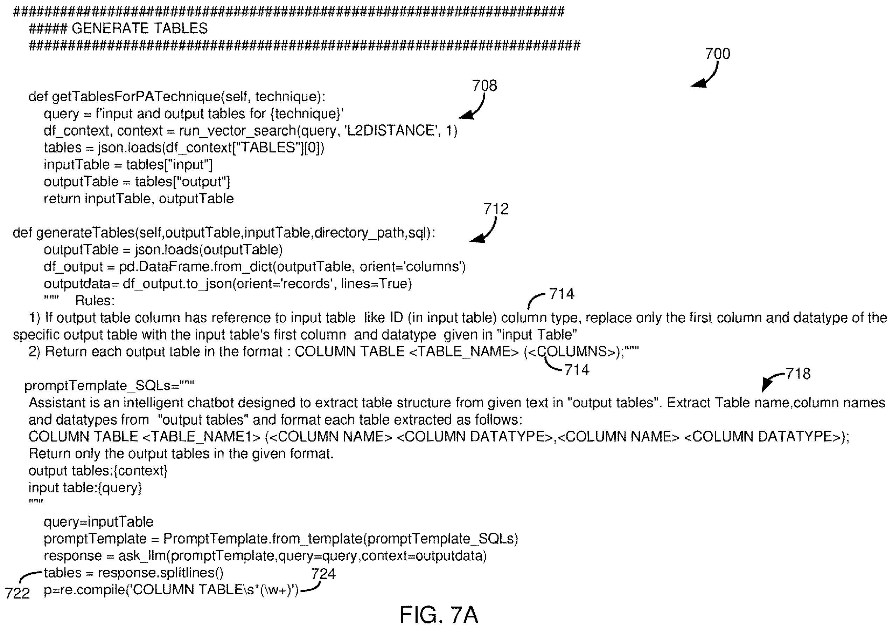

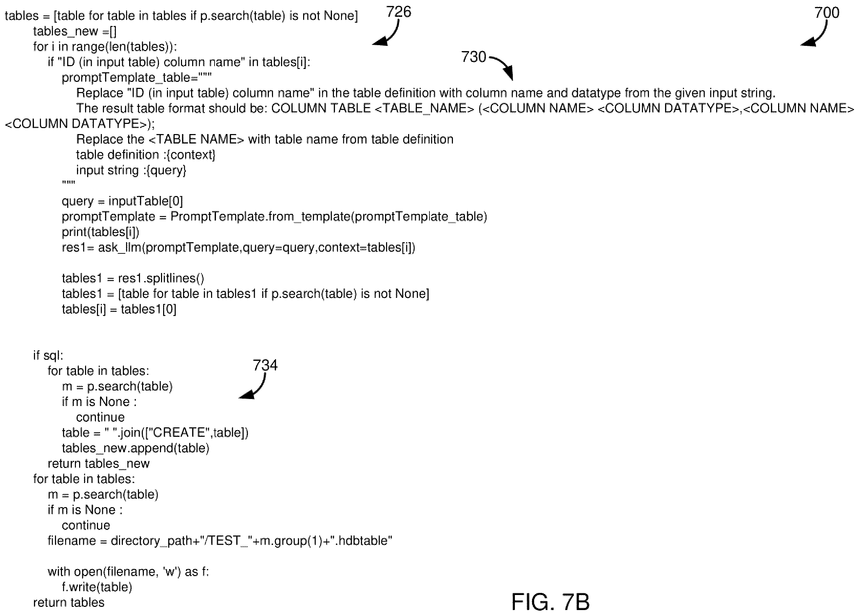

FIGS. 7A and 7B illustrate code 700 that can be executed as part of the operations 166, 168, 170. A getTablesForPATechnique method 708 performs a vector search to identify the input and output tables for the selected predictive analytics technique. This method extracts the necessary table information from the context obtained through the vector search to identity input and output tables, and their definitions (such as columns and column datatypes) in the table 122.

A generateTables method 712 loads the outputTable from a JSON string returned by the method 708 and converts it into a pandas DataFrame, where keys of the dictionary formed from the JSON string are used as column names. This DataFrame is then converted back to a JSON format, where each row of the DataFrame corresponds to a JSON object, representing the definition of a particular output table.

The method 712 uses rules 714 (comments in the code 700 that are implemented by operations of the code) to generate the output tables. These rules specify that if an output table column references an input table column (such as an ID column), the first column and datatype of the output table should be replaced with those from the input table.

A prompt template 718 is defined to instruct the large language model 144 to extract table structures, including table names, column names, and column data types, from the output tables and provide the extracted information in a specified format similar to SQL. The large language model 144 is queried with the processed set of output tables as the context and the input table as the query.

At line 722, the response from the large language model is split into individual lines, where each line corresponds to a potential output table definition. Line 724 filters these lines, retaining only those that match the pattern "COLUMN TABLE <TABLE_NAME>," ensuring that only valid table definitions are further processed.

Referring now to FIG. 7B, code 726 analyzes the returned output table information to determine whether they include placeholders indicating that a column identifier should be replaced with a corresponding column name and data type from an input table. For tables where such a placeholder is found, a prompt template 730 is used to instruct the large language model 144 to replace the placeholder with the actual column name and data type from the input table.

Code 734 processes the output tables differently depending on the value of a flag. If the flag is set to true, SQL CREATE TABLE statements are generated and returned. Otherwise, filenames are generated based on the table names, and the respective table definitions are saved to the corresponding files.

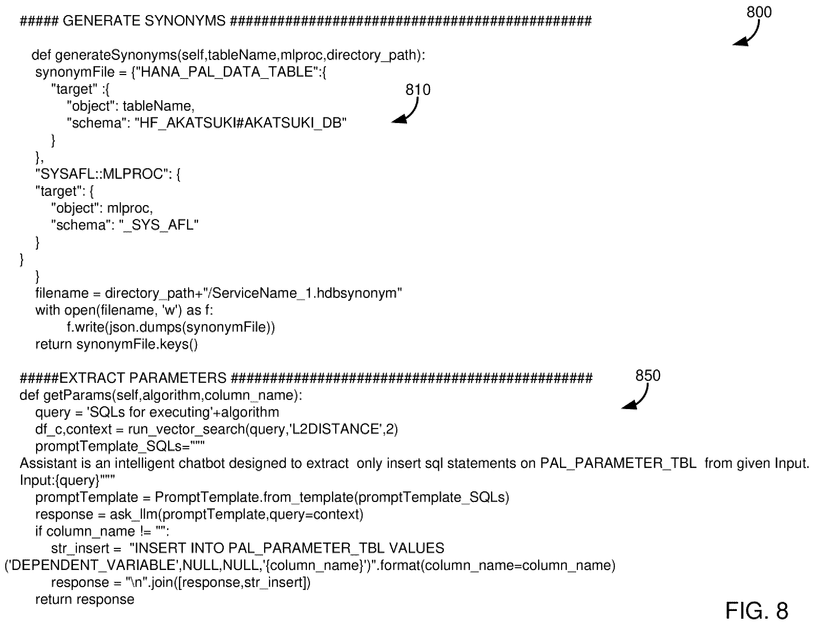

Turning to code 800 of FIG. 8, the code 800 includes code 810 that maps an input data table for a selected predictive analytics technique to the specific table that holds the data to be processed. The code 810 also maps a variable to the specific predictive analytics technique to be used.

The code 800 also includes code 850 that extracts parameter information for the selected technique from the table 122. The code 850 generates SQL INSERT statements for populating the PAL_PARAMETER_TBL that will be used during the execution of the selected technique. Parameters extracted by the search of the table 122 are then processed by the large language model 144 to isolate the INSERT statements from the documentation of the technique that target the PAL_PARAMETER_TBL. Additionally, if a specific column name is provided, the code 850 appends an extra INSERT statement that identifies this column as the dependent variable in the analysis. A complete set of generated SQL statements is returned, ready to be executed to configure the algorithm for the analysis.

Returning to FIG. 1, with all of the information necessary for generating a procedure to execute the selected predictive analytics technique, the orchestrator 130 can perform operations at 180 to generate the procedure. In particular, operations 182 provide a prompt to the large language model 144 to generate a procedure using a procedure template and particular values to be inserted into the template.

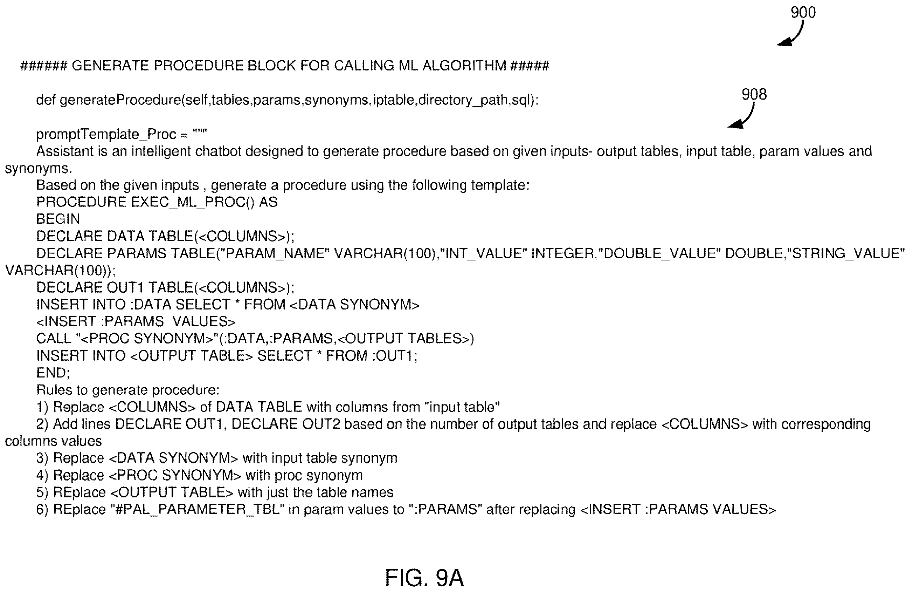

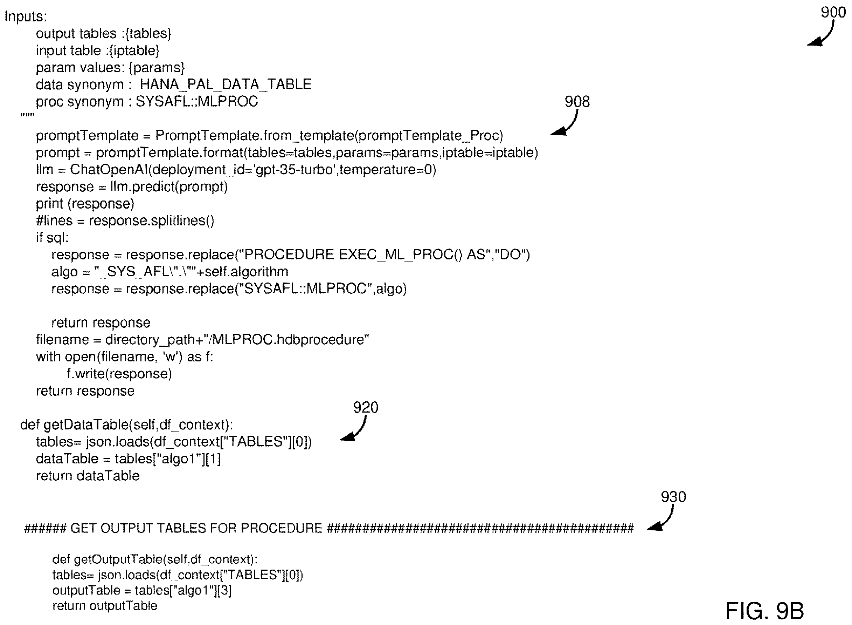

FIGS. 9A and 9B provide code 900 can be executed as part of the operations 180, 182 to generate a procedure for calling the selected predictive analytics technique. A generateProcedure method 908 of FIGS. 9A and 9B provides a prompt that the orchestrator 130 can send to the large language model 144 to generate a procedure based on provided inputs, including output tables, input tables, parameter values, and synonyms (aliases that reference mapped tables, such as where an alias is mapped to a table of particular input data). The method 908 constructs a procedure using a predefined template, which includes operations to execute the selected predictive analytic technique and to declare a data table, a parameters table, and an output table for procedure execution. It writes the procedure to a file or returns it as a string, with modifications to make it compatible with SQL execution.

With continued reference to FIG. 9B, a getDataTable method 920 retrieves the input table from the context, which is used in generating the procedure. Code 930 retrieves output tables to be used in generating the procedure.

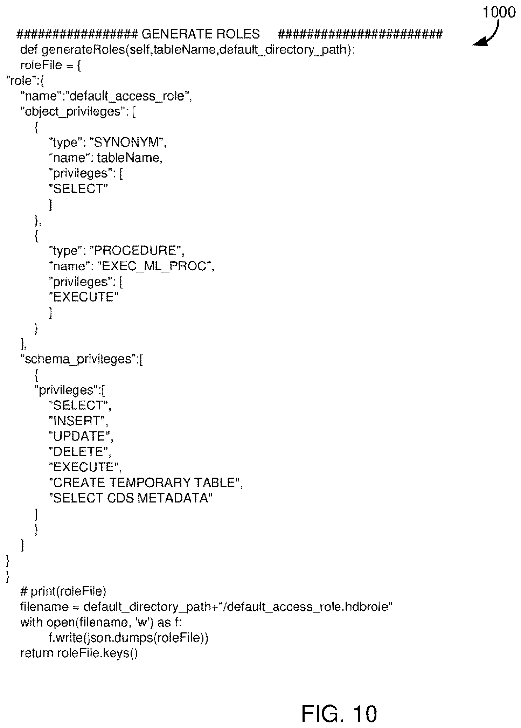

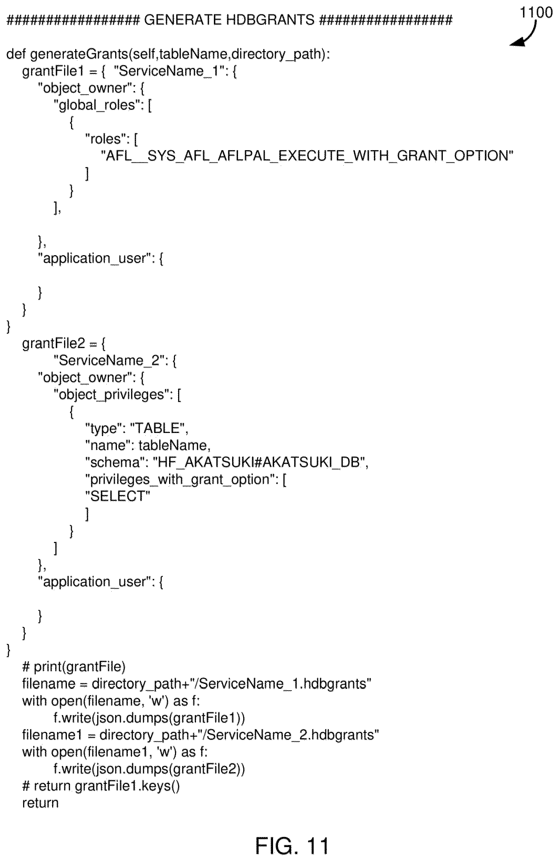

In some cases, a user or computing process can specify a particular output format, such as whether to generate physical database objects, such as traditional objects used in SAP HANA, or other types of objects, such as HDI (HANA Deployment Infrastructure) objects, which can be thought of as containerized database objects. Both types of objects can be consumed by SAP DataSphere. With reference to FIG. 10 and 11, code 1000, 1100 provide, respectively, code for implementing roles and permission grants that allow access to data objects used for executing a procedure for the selected predictive analytics technique, particularly in situations involving HDI or similar objects, as opposed to SQL generation. Code 1000 specifies particular privileges assigned to a role for procedure execution, while code 1100 associates the roles with specific data objects.

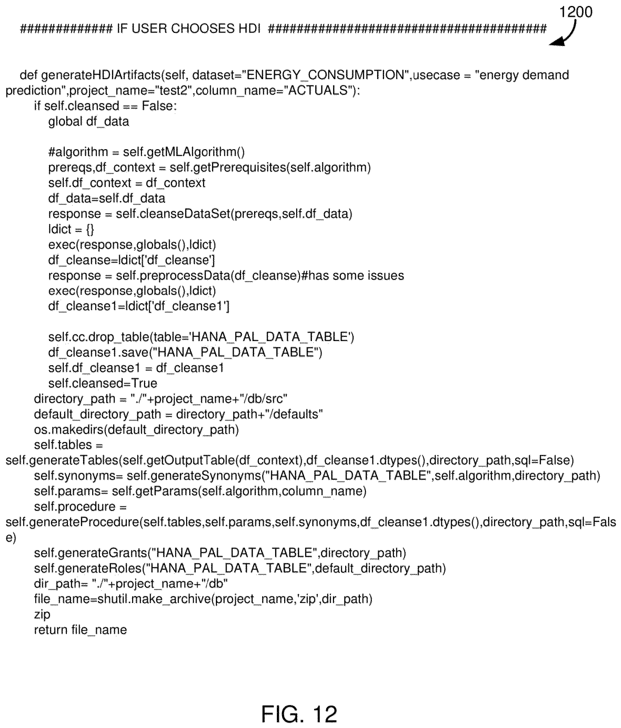

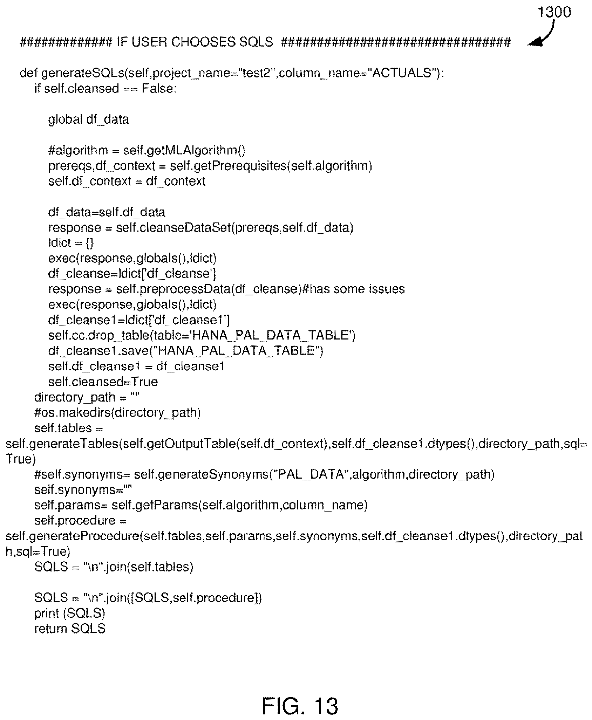

FIGS. 12 and 13 provide code 1200, 1300 that effectively coordinates the generation of HDI objects or SQL, assuming a selection of a predictive analytics technique as described in conjunction with operations with the large language model 144, or some other type of selection, such as with user input identifying a data set to be analyzed. The code 1200, 1300 calls functions defined in previously defined code to produce a final output procedure to be executed and the SQL commands or HDI objects used in the procedure.

### Example 3 - Example Operations for Configuring Predictive Analytics Technique

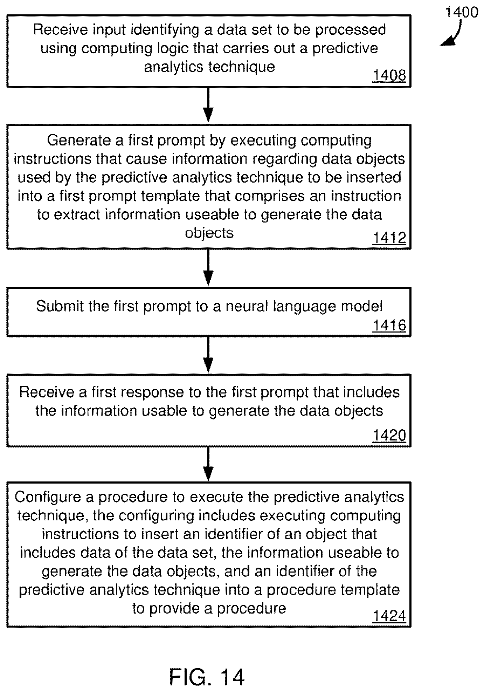

FIG. 14 provides a flowchart of a process 1400 of configuring a predictive analytics technique. At 1408, user input is received identifying a data set to be processed using computing logic that carries out a predictive analytics technique. A first prompt is generated at 1412 by executing computing instructions that cause information regarding data objects used by the predictive analytics technique to be inserted into a first prompt template. This template includes an instruction to extract information usable to generate the data objects.

At 1416, the first prompt is submitted to a neural language model. A first response is received at 1420 to the first prompt that includes the information usable to generate the data objects.

At 1424, a procedure is configured to execute the predictive analytics technique. The configuring includes executing computing instructions to insert an identifier of an object that comprises data of the data set, the information usable to generate the data objects, and an identifier of the predictive analytics technique into a procedure template to provide a procedure.

### Example 4 - Additional Examples

Example 1 provides a computing system that includes at least one hardware processor, at least one memory coupled to the hardware processor, and one or more computer-readable storage media. The storage media comprise computer-executable instructions that, when executed, cause the computing system to perform operations. These operations include receiving input identifying a data set to be processed using a predictive analytics technique. A first prompt is generated with information regarding data objects used by the predictive analytics technique. The first prompt is submitted to a neural language model and a first response is received with information usable to generate the data objects. A procedure is configured to execute the predictive analytics technique.

Example 2 is the computing system of Example 1, where the operations further include parsing the first response to extract table structures. The information usable to generate the data objects includes commands that use the extracted table structures.

Example 3 is the computing system of Example 1 or Example 2, where the operations further include executing the procedure to provide predictive analytics results for the data set.

Example 4 is the computing system of any of Examples 1-3, where the operations further include generating a second prompt to extract prerequisites for the predictive analytics technique. The second prompt is submitted to the neural language model and a second response is received with the extracted prerequisites.

Example 5 is the computing system of Example 4, where the operations further include generating a third prompt to obtain computing code for executing operations on the data set to conform with the extracted prerequisites. The third prompt is submitted to the neural language model and a third response with the computing code is received.

Example 6 is the computing system of Example 4 or Example 5, where the operations further include performing a similarity search in a vector database to extract prerequisites for the predictive analytics technique from embeddings. The results are inserted into the second prompt template.

Example 7 is the computing system of any Examples 1-6, where the user input identifies the predictive analytics technique.

Example 8 is the computing system of any of Examples 1-7, where the user input describes an analysis to be performed on the data set but does not identify the predictive analytics technique. The operations further include generating a vector with a semantic embedding of the text describing the analysis. A similarity search is performed in a vector database and an identifier of the predictive analytics technique is returned.

Example 9 is the computing system of any of Examples 1-8, where the operations further include obtaining electronic documents describing various predictive analytics techniques and generating vectors with semantic embeddings for the descriptions.

Example 10 is the computing system of any of Examples 1-9, where the user input describes an analysis to be performed on the data set but does not identify the predictive analytics technique. A prompt to select a predictive analytics technique is generated. The prompt is submitted the neural language model, and a response is received with the predictive analytics technique.

Example 11 is the computing system of Examples 1-10, where the operations further include searching a database to identify semantic embeddings with information regarding data objects and returning the information in response to the search.

Example 12 is the computing system of Example 11, where the semantic embeddings include input and output tables used by the predictive analytics technique.

Example 13 is the computing system of Example 11, where the semantic embeddings include parameters used by the predictive analytics technique.

Example 14 provides a method implemented in a computing system that includes at least one hardware processor and at least one memory coupled to the hardware processor. The method includes receiving input identifying a data set to be processed using a predictive analytics technique. It generates a first prompt by executing computing instructions that insert information regarding data objects used by the predictive analytics technique into a first prompt template. This template includes an instruction to extract information usable to generate the data objects. The first prompt is submitted to a neural language model and a first response is received with the information usable to generate the data objects. A procedure is configured to execute the predictive analytics technique by inserting an identifier of an object that comprises data of the data set, the information usable to generate the data objects, and an identifier of the predictive analytics technique into a procedure template.

Example 15 is the method of Example 14 where the method further includes generating a second prompt by executing computing instructions that insert text regarding prerequisites for the predictive analytics technique into a second prompt template. This template includes an instruction to extract prerequisites from the text. The second prompt is submitted to the neural language model and a second response is received with the extracted prerequisites.

Example 16 is the method of Example 15, and further includes generating a third prompt by executing computing instructions that insert descriptive information about the data set and the extracted prerequisites into a third prompt template. This template includes an instruction to provide computing code for executing operations on the data set so that the data set conforms with the extracted prerequisites. The third prompt is submitted to the neural language model and a third response with the computing code is received.

Example 17 is the method of any of Examples 14-16, where the user input includes text describing an analysis to be performed on the data set using the predictive analytics technique, but the user input does not identify the predictive analytics technique. The method further includes generating a vector that includes a semantic embedding of the text describing the analysis. A similarity search is performed in a vector database that includes vectors with respective embeddings for descriptions of various predictive analytics techniques. An identifier of the predictive analytics technique is returned in response to the similarity search.

Example 18 provides one or more non-transitory computer-readable storage media that include computer-executable instructions. When executed by a computing system that includes at least one hardware processor and at least one memory coupled to the hardware processor, these instructions cause the computing system to receive input identifying a data set to be processed using a predictive analytics technique. A first prompt is generated by executing computing instructions that insert information regarding data objects used by the predictive analytics technique into a first prompt template. This template includes an instruction to extract information usable to generate the data objects. The first prompt is submitted to a neural language model and a first response is received with the information usable to generate the data objects. A procedure is configured to execute the predictive analytics technique by inserting an identifier of an object that comprises data of the data set, the information usable to generate the data objects, and an identifier of the predictive analytics technique into a procedure template.

Example 19 is the non-transitory computer-readable storage media of Example 18, having computer-executable instructions that, when executed by the computing system, cause the computing system to generate a second prompt by executing computing instructions that insert text regarding prerequisites for the predictive analytics technique into a second prompt template. This template includes an instruction to extract prerequisites from the text. The second prompt is submitted to the neural language model and a second response is received with the extracted prerequisites.

Example 20 is the non-transitory computer-readable storage media of Example 19, where the storage media further include computer-executable instructions that, when executed by the computing system, cause the system to perform a similarity search in a vector database. This database includes vectors with respective embeddings for descriptions of various predictive analytics techniques. Prerequisites for the predictive analytics technique are extracted from the embeddings and insert the results into the second prompt template.

### Example 5 - Computing Systems

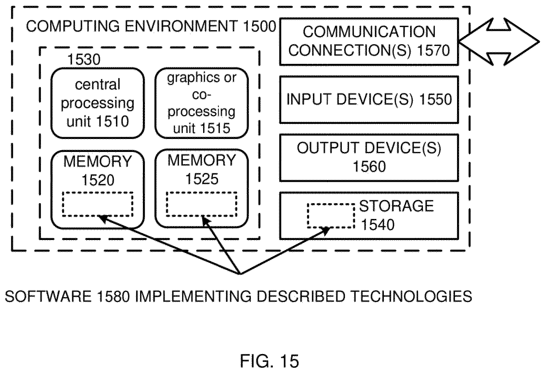

FIG. 15 depicts a generalized example of a suitable computing system 1500 in which the described innovations may be implemented. The computing system 1500 is not intended to suggest any limitation as to scope of use or functionality of the present disclosure, as the innovations may be implemented in diverse general-purpose or special-purpose computing systems.

With reference to FIG. 15, the computing system 1500 includes one or more processing units 1510, 1515 and memory 1520, 1525. In FIG. 15, this basic configuration 1530 is included within a dashed line. The processing units 1510, 1515 execute computer-executable instructions. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 15 shows a central processing unit 1510 as well as a graphics processing unit or co-processing unit 1515. The tangible memory 1520, 1525 may be volatile memory (e.g., registers, cache, RAM), nonvolatile memory (e.g., ROM, EEPROM, flash memory, etc.), or some combination of the two, accessible by the processing unit(s) 1510, 1515. The memory 1520, 1525 stores software 1580 implementing one or more innovations described herein, in the form of computer-executable instructions suitable for execution by the processing unit(s) 1510, 1515. The memory 1520, 1525, may also store database data or buffer data.

A computing system 1500 may have additional features. For example, the computing system 1500 includes storage 1540, one or more input devices 1550, one or more output devices 1560, and one or more communication connections 1570. An interconnection mechanism (not shown) such as a bus, controller, or network interconnects the components of the computing system 1500. Typically, operating system software (not shown) provides an operating environment for other software executing in the computing system 1500, and coordinates activities of the components of the computing system 1500. In some cases, the operating system can manage, or assist in managing, query language execution threads or job execution threads.

The tangible storage 1540 may be removable or non-removable, and includes magnetic disks, magnetic tapes or cassettes, CD-ROMs, DVDs, or any other medium which can be used to store information in a non-transitory way and which can be accessed within the computing system 1500. The storage 1540 stores instructions for the software 1520 implementing one or more innovations described herein.

The input device(s) 1550 may be a touch input device such as a keyboard, mouse, pen, or trackball, a voice input device, a scanning device, or another device that provides input to the computing system 1500. The output device(s) 1560 may be a display, printer, speaker, CD-writer, or another device that provides output from the computing system 1500.

The communication connection(s) 1570 enable communication over a communication medium to another computing entity, such as another database server. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 6 - Cloud Computing Environment

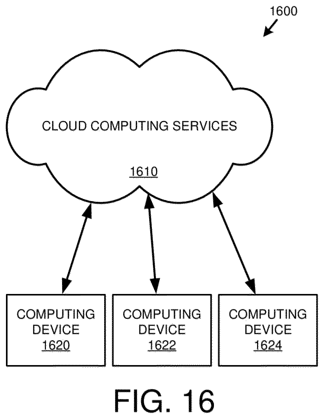

FIG. 16 depicts an example cloud computing environment 1600 in which the described technologies can be implemented. The cloud computing environment 1600 comprises cloud computing services 1610. The cloud computing services 1610 can comprise various types of cloud computing resources, such as computer servers, data storage repositories, networking resources, etc. The cloud computing services 1610 can be centrally located (e.g., provided by a data center of a business or organization) or distributed (e.g., provided by various computing resources located at different locations, such as different data centers and/or located in different cities or countries).

The cloud computing services 1610 are utilized by various types of computing devices (e.g., client computing devices), such as computing devices 1620, 1622, and 1624. For example, the computing devices (e.g., 1620, 1622, and 1624) can be computers (e.g., desktop or laptop computers), mobile devices (e.g., tablet computers or smart phones), or other types of computing devices. For example, the computing devices (e.g., 1620, 1622, and 1624) can utilize the cloud computing services 1610 to perform computing operators (e.g., data processing, data storage, and the like).

### Example 7 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 15, computer-readable storage media include memory 1520 and 1525, and storage 1540. The term computer-readable storage media does not include signals and carrier waves. In addition, the term computer-readable storage media does not include communication connections (e.g., 1570).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Python, Adobe Flash, or any other suitable programming language. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one hardware processor;
at least one memory coupled to the at least one hardware processor; and
one or more computer-readable storage media comprising computer-executable instructions that, when executed, cause the computing system to perform operations comprising:
receiving input identifying a data set to be processed using computing logic that carries out a predictive analytics technique;
generating a first prompt by executing computing instructions that cause information regarding data objects used by the predictive analytics technique to be inserted into a first prompt template that comprises an instruction to extract information useable to generate the data objects;
submitting the first prompt to a neural language model;
receiving a first response to the first prompt that comprises the information usable to generate the data objects; and
configuring a procedure to execute the predictive analytics technique, the configuring comprising executing computing instructions to insert an identifier of an object that comprises data of the data set, the information useable to generate the data objects, and an identifier of the predictive analytics technique into a procedure template to provide a procedure.

2. The computing system of claim 1, the operations further comprising:
parsing the first response to extract table structures, wherein the information usable to generate the data objects comprises commands that use the extracted table structures;
and/or
the operations further comprising:
executing the procedure to provide predictive analytics results for data of the data set.

3. The computing system of claim 1 or 2, the operations further comprising:
generating a second prompt by executing computing instructions that cause text regarding prerequisites for the predictive analytics technique to be inserted into a second prompt template that comprises an instruction to extract prerequisites from the text;
submitting the second prompt to the neural language model; and
receiving a second response to the second prompt, the second response comprising extracted prerequisites for the predictive analytics technique.

4. The computing system of any one of the preceding claims, the operations further comprising:
generating a third prompt by executing computing instructions that cause descriptive information about the data set and the extracted prerequisites to be inserted into a third prompt template that includes an instruction to provide computing code for executing operations on the data set such that the data set conforms with the extracted perquisites;
submitting the third prompt to the neural language model; and
receiving a third response to the third prompt, the third response comprising the computing code.

5. The computing system of any one of the preceding claims, the operations further comprising:
performing a similarity search in a vector database comprising vectors comprising respective embeddings for descriptions of respective predictive analytics techniques of a plurality of predictive analytics techniques to extract prerequisites for the predictive analytics technique from the embeddings; and
inserting results of the similarity search into the second prompt template.

6. The computing system of any one of the preceding claims, wherein the user input identifies the predictive analytics technique;
or
wherein the user input comprises text describing an analysis desired to be performed on the data set using the predictive analytics technique, but the user input does not identify the predictive analytics technique, the operations further comprising:
generating a vector comprising a semantic embedding of the text describing the analysis;
performing a similarity search in a vector database comprising vectors comprising respective embeddings for descriptions of respective predictive analytics techniques of a plurality of predictive analytics techniques; and
returning an identifier of the predictive analytics technique in response to the similarity search.

7. The computing system of any one of the preceding claims, the operations further comprising:
obtaining at least one electronic document comprising descriptions of a plurality of predictive analytics techniques, the description comprising names of respective predictive analytic techniques of the plurality of predictive analytics techniques, respective prerequisites for at least a portion of respective predictive analytic techniques, at least one respective input table for the respective predictive analytic techniques, and at least one respective output table for the respective predictive analytic techniques; and
generating vectors comprising semantic embeddings for at least a portion of the descriptions.

8. The computing system of any one of the preceding claims, wherein the user input comprises text describing an analysis desired to be performed on the data set using the predictive analytics technique, but the user input does not identify the predictive analytics technique, the operations further comprising:
generating a second prompt by executing computing instructions that insert the text describing the analysis desired to be performed into a second prompt template that comprises an instruction to select a predictive analytics technique from a plurality of predictive analytics techniques specified in the second prompt;
submitting the second prompt to the neural language model; and
receiving a second response to the second prompt, the second prompt comprising the predictive analytics technique.

9. The computing system of any one of the preceding claims, the operations further comprising:
searching a database to identify semantic embeddings comprising the information regarding data objects; and
returning the information regarding data objects in response to the searching.

10. The computing system of any one of the preceding claims, wherein the semantic embeddings comprise semantic embeddings of at least one input table and at least one output table used by the predictive analytics technique;
and/or
wherein the semantic embeddings comprise semantic embeddings of parameters used by the predictive analytics technique.

11. A method, implementing in a computing system comprising at least one hardware processor and at least one memory coupled to the at least one hardware processor, the method comprising:
receiving input identifying a data set to be processed using computing logic that carries out a predictive analytics technique;
generating a first prompt by executing computing instructions that cause information regarding data objects used by the predictive analytics technique to be inserted into a first prompt template that comprises an instruction to extract information useable to generate the data objects;
submitting the first prompt to a neural language model;
receiving a first response to the first prompt that comprises the information usable to generate the data objects; and
configuring a procedure to execute the predictive analytics technique, the configuring comprising executing computing instructions to insert an identifier of an object that comprises data of the data set, the information useable to generate the data objects, and an identifier of the predictive analytics technique into a procedure template to provide a procedure.

12. The method of claim 11, further comprising:
generating a second prompt by executing computing instructions that cause text regarding prerequisites for the predictive analytics technique to be inserted into a second prompt template that comprises an instruction to extract prerequisites from the text;
submitting the second prompt to the neural language model; and
receiving a second response to the second prompt, the second response comprising extracted prerequisites for the predictive analytics technique;
optionally,
further comprising:
generating a third prompt by executing computing instructions that cause descriptive information about the data set and the extracted prerequisites to be inserted into a third prompt template that includes an instruction to provide computing code for executing operations on the data set such that the data set conforms with the extracted perquisites;
submitting the third prompt to the neural language model; and
receiving a third response to the third prompt, the third response comprising the computing code.

13. The method of claim 11 or 12, wherein the user input comprises text describing an analysis desired to be performed on the data set using the predictive analytics technique, but the user input does not identify the predictive analytics technique, the method further comprising:
generating a vector comprising a semantic embedding of the text describing the analysis;
performing a similarity search in a vector database comprising vectors comprising respective embeddings for descriptions of respective predictive analytics techniques of a plurality of predictive analytics techniques; and
returning an identifier of the predictive analytics technique in response to the similarity search.

14. One or more non-transitory computer-readable storage media comprising:
computer-executable instructions that, when executed by a computing system comprising at least one hardware processor and at least one memory coupled to the at least one hardware processor, cause the computing system to receive input identifying a data set to be processed using computing logic that carries out a predictive analytics technique;
computer-executable instructions that, when executed by the computing system, cause the computing system to generate a first prompt by executing computing instructions that cause information regarding data objects used by the predictive analytics technique to be inserted into a first prompt template that comprises an instruction to extract information useable to generate the data objects;
computer-executable instructions that, when executed by the computing system, cause the computing system to submit the first prompt to a neural language model;
computer-executable instructions that, when executed by the computing system, cause the computing system to receive a first response to the first prompt that comprises the information usable to generate the data objects; and
computer-executable instructions that, when executed by the computing system, cause the computing system to configure a procedure to execute the predictive analytics technique, the configuring comprising executing computing instructions to insert an identifier of an object that comprises data of the data set, the information useable to generate the data objects, and an identifier of the predictive analytics technique into a procedure template to provide a procedure.

15. One or more non-transitory computer-readable storage media of claim 14, further comprising:
computer-executable instructions that, when executed by the computing system, cause the computing system to generate a second prompt by executing computing instructions that cause text regarding prerequisites for the predictive analytics technique to be inserted into a second prompt template that comprises an instruction to extract prerequisites from the text;
computer-executable instructions that, when executed by the computing system, cause the computing system to submit the second prompt to the neural language model; and receiving a second response to the second prompt, the second response comprising extracted prerequisites for the predictive analytics technique;
optionally,
further comprising:
computer-executable instructions that, when executed by the computing system, cause the computing system to perform a similarity search in a vector database comprising vectors comprising respective embeddings for descriptions of respective predictive analytics techniques of a plurality of predictive analytics techniques to extract prerequisites for the predictive analytics technique from the embeddings; and
computer-executable instructions that, when executed by the computing system, cause the computing system to insert results of the similarity search into the second prompt template.
